**Europäisches Patentamt**

**European Patent Office**

**Office européen des brevets**

(19)

(11) Veröffentlichungsnummer: **0 021 420**
A1

# (12) EUROPÄISCHE PATENTANMELDUNG

(21) Anmeldenummer: **80103597.3**

(22) Anmeldetag: **25.06.80**

(51) Int. Cl.³: **B 29 D 7/02,** B 29 F 3/08

(30) Priorität: **29.06.79 DE 2926262**

(43) Veröffentlichungstag der Anmeldung: **07.01.81**
**Patentblatt 81/1**

(84) Benannte Vertragsstaaten: **AT FR IT NL**

(71) Anmelder: **MANNESMANN DEMAG KUNSTSTOFFTECHNIK ZWEIGNIEDERLASSUNG DER MANNESMANN DEMAG AKTIENGESELLSCHAFT,** Rennweg 37, D-8500 Nürnberg (DE)

(72) Erfinder: **Schwitalla, Wilhelm, Weinberg 15, D-8501 Eckenhaid (DE)**

(74) Vertreter: **LOUIS, PÖHLAU, LOHRENTZ & SEGETH,** Kesslerplatz 1, D-8500 Nürnberg (DE)

(54) **Kühlvorrichtung für mittels eines Blaskopfes hergestellte Kunststoff-Schlauchfolien.**

(57) Es wird eine Kühlvorrichtung bei einer Blaseinrichtung für Kunststoff-Schlauchfolien (1) vorgeschlagen, bei der Kühlluft durch einen inneren und äußeren Ringspalt (18, 13) zugeführt wird und ein den Blaskopf (2) axial durchsetzendes Absaugrohr (6) sowie ein Luftführungsrohr (25), welches das Absaugrohr (6) koaxial umschließt, vorgesehen sind. Um bei einer derartigen Vorrichtung eine verstärkte Kühlung an der Schlauchfolien-Innenseite und damit eine entsprechende Erhöhung der Durchsatzleistung zu erreichen, wobei zudem die Schlauchfolienstabilität verbessert werden soll, ist vorgesehen, daß unten im Luftführungsrohr (25) eine mit Zuluft gespeiste Ausgleichskammer (22) vorgesehen ist, die in einen radialen, etwa in der Fläche des Luftführungsrohres (25) liegenden Nebenluftaustrittsspalt (26) mündet, der einen gegenüber dem inneren Ringspalt (18) vergleichsweise großen Austrittsquerschnitt aufweist. Für bestimmte Einstellungen kann die Weite des inneren Ringspaltes (18) und/oder des Nebenluftaustrittsspaltes (26) bzw. der Ausgleichskammer (22) verstellbar sein.

– 1 –

Kühlvorrichtung für mittels eines Blaskopfes hergestellte Kunststoff-Schlauchfolien

Die Erfindung betrifft eine Kühlvorrichtung für mittels eines Blaskopfes hergestellte Kunststoff-Schlauchfolien, welche anschließend an den Blaskopf zur Zuführung von Kühlluft je einen bezüglich des Folienschlauches inneren und äußeren Ringspalt sowie zur Bildung des Innenluftsystems ein den Blaskopf axial durchsetzendes Absaugrohr, ein dieses koaxial umgebendes, von unten an den inneren Ringspalt heranführendes Zuluftrohr und ein an die obere Lippe des inneren Ringspaltes oben anschließendes, das Absaugrohr ebenfalls koaxial umschließendes Luftführungsrohr aufweist.

Es handelt sich bei der Kühlvorrichtung nach der Erfindung um ein Innenkühlluftsystem, bei dem mit Hilfe eines Druckgebläses Kühlluft über ein Zuluftrohr durch das Schlauchfolienwerkzeug, welches einen Ringspalt aufweist, geführt wird. Die Kühlluft wird bei bekannten Kühlvorrichtungen über einen einzigen inneren Ringspalt oder, bei besonderer Ausgestaltung, über mehrere, sehr schmale und radial nach außen weisende Ringspalten an die Innenfläche der aus dem Ringschlitz des Schlauchfolienwerkzeuges austretenden Folienschlauchs geblasen. Der Kühlluftstrom strömt dabei in dem Spalt zwischen dem gebildeten Folienschlauch und dem Luftführungsrohr nach oben und wird über das Absaugrohr mittels eines Sauggebläses angesaugt. Zur Einstellung eines bestimmten Schlauchdurchmessers ist dabei ein gewisser Überdruck im Inneren der Folienblase erforderlich. Dieser Überdruck wird über ein Regelsystem konstant gehalten, welches die zugeführte und abgesaugte Luftmenge entsprechend aufeinander abstimmt.

Eine derartige Kühlvorrichtung ist beispielsweise auch in der DE-OS 27 25 832 gezeigt, wo die Innenkühlluft nur durch einen Ringspalt zwischen dem Ringschlitz des Folienwerkzeuges und dem Luftführungsrohr austritt. Eine Besonderheit dieser bekannten Vorrichtung ist darin zu sehen, daß außerhalb des Ringschlitzes des Folienwerkzeuges nicht nur, wie im allgemeinen üblich, ein äußerer Ringschlitz vorhanden ist, aus dem die Luft unmittelbar benachbart zur Außenwand des Folienschlauches austritt, sondern außerdem außerhalb dieses äußeren Ringschlitzes eine umlaufende Stabilisierungsringkammer, der ein Teil der Kühlluft des äußeren Systems zugeführt wird und aus der Luft leicht schräg in Richtung auf die Folienblase über einen Ringspalt sehr großer Weite austritt. Diese Stabilisierungsringkammer hat lediglich den Zweck, ein Aufsitzen
der Folienblase auf der oberen Lippe des äußeren
Ringspaltes zu verhindern, wenn Folienschläuche
sehr großen Durchmessers erzeugt werden sollen.
Diese Gefahr besteht vor allem dann, wenn der Spalt
zwischen der oberen Lippe des äußeren Ringspaltes
und der Folienblase sehr eng wird, da ja dann die
Kühlluft mit verhältnismäßig hoher Geschwindigkeit
hindurchströmen muß, was aufgrund des Venturi-
Effektes zu einem Ansaugen der Folienblase an der
Ringspalt-Lippe führen kann. Eine verbesserte Kühlwirkung kann mit der bekannten Vorrichtung wegen der
geringen, die Stabilisierungsringkammer durchströmenden Luftmenge nicht erreicht werden.

Der Erfindung liegt nun die Aufgabe zugrunde, eine
Kühlvorrichtung der eingangs erwähnten, bekannten
Art bezüglich des Innenkühlluftsystems derart weiterzubilden, daß eine gegenüber den bekannten Vorrichtungen verstärkte Kühlung an der Schlauchfolien-
innenseite und damit eine entsprechende Erhöhung der
Durchsatzleistung der Schlauchfolienanlage erreicht
wird, wobei zudem die Schlauchfolienstabilität im
Aufweitungsbereich des Folienschlauches durch eine
ausreichende Stützwirkung des äußeren und inneren
Kühlluftstromes verbessert werden soll.

Zur Lösung dieser Aufgabe wird nach der Erfindung
vorgeschlagen, die gattungsgemäße Kühlvorrichtung
so auszubilden, daß im Bereich des unteren Endes des Luftführungsrohres eine mit dem Zuluftrohr in Strömungsverbindung stehende Ausgleichskammer vorgesehen ist, die in einen radialen, etwa in der Fläche des Luftführungsrohres liegenden Nebenluftaustrittsspalt mündet, der einen gegenüber dem Querschnitt des inneren Ringspaltes vergrößerten Querschnitt aufweist.

Bei der Kühlvorrichtung nach der Erfindung erfolgt also die Kühlung der Innenseite des Folienschlauches sowohl über den an sich bekannten inneren Ringspalt als auch zusätzlich über die Ausgleichskammer und den anschließenden Nebenluftaustrittsspalt. Dies bietet zum einen den Vorteil, daß insgesamt eine größere Kühlluftmenge zugeführt werden kann, ohne daß die Strömungsgeschwindigkeit im inneren Ringspalt zu hoch würde, in welchem Falle ja die Gefahr bestünde, daß der Folienschlauch an der Oberlippe des inneren Ringspaltes bzw. dem Luftführungsrohr aufgrund des Venturi-Effektes zum Anhaften kommt. Die Kühlwirkung wird aber bei der Vorrichtung nach der Erfindung weiterhin dadurch erhöht, daß der durch den inneren Ringspalt zugeführte Kühlluftstrom durch den anschließend auf ihn treffenden Kühlluftstrom aus dem Nebenluftaustrittsspalt eine Verwirbelung erfährt mit dem Effekt, daß eine größere Wärmemenge abgeführt werden kann, somit die Kühlwirkung im Vergleich zu einer im wesentlichen laminaren Strömung, wie sie bei Vorhandensein nur eines Ringspaltes auftritt, zusätzlich verstärkt wird. Weiterhin ist bei der Ausbildung der Vorrichtung nach der Erfindung vorteilhaft, daß sowohl der innere Ringspalt als auch der Nebenluftaustrittsspalt von dem gemeinsamen Zuluftrohr gespeist werden. Dies hat zur Folge, daß sich gleichsam automatisch in Abhängigkeit von dem Durchmesser der zu erzeugenden Schlauchfolie eine Einstellung der Teilluftströme durch den inneren Ringspalt und den Nebenluftaustrittsspalt ergibt. Wenn ein geringer Schlauchdurchmesser gefahren wird, wird der innere Ringspalt durch den Folienschlauch relativ stark verdeckt. In diesem Falle strömt ein verhältnismäßig großer Teilluftstrom durch die Ausgleichskammer und den Nebenluftaustrittsspalt, so daß die Gefahr eines Ansaugens der Folienblase an der oberen Lippe des inneren Ringspaltes kaum besteht, trotzdem jedoch über den Nebenluftaustrittsspalt ausreichend Kühlluft zugeführt wird. Soll dagegen ein Folienschlauch verhältnismäßig großen Durchmessers erzeugt werden, ist der Spalt zwischen der oberen Lippe des inneren Ringspaltes und der Innenwand der Schlauchfolie relativ groß. In diesem Falle kann dann auch der größere Teilstrom des Kühlluftstromes durch den inneren Ringspalt strömen, was im Hinblick auf eine rasche Kühlung der dann anschließend an den Düsen-Austrittsspalt sofort stark aufgeweiteten Folienblase vorteilhaft ist. Man erzielt also mit der Kühlvorrichtung nach der Erfindung eine ausgezeichnete und rasche Kühlung des Folienschlauches, so daß bei Einsatz einer Kühlvorrichtung nach der Erfindung die Durchsatzleistung der Anlage beachtlich erhöht werden kann. Darüber hinaus wird aufgrund der speziellen Luftführung des Innenluftsystems, insbesondere auch durch die gleichsam automatische Veränderung der durch den inneren Ringspalt bzw. den Nebenluftaustrittsspalt tretenden Luftmenge zuverlässig erreicht, daß ein Flattern oder Schlagen des Folienschlauches, was zu erheblichen Unregelmäßigkeiten am Endprodukt führen kann, nicht auftritt. Es wird ja jeweils durch die vorhandenen Spalte nur eine Luftmenge geführt, die zwar für eine Stabilisierung der Folienblase ausreicht, nicht jedoch zu einem Ansaugen oder sonstiger Bewegung der Folie aufgrund zu hoher Strömungsgeschwindigkeiten führt.

Eine konstruktiv günstige Lösung erhält man, wenn bei der Vorrichtung nach der Erfindung die axiale Höhe der Ausgleichskammer etwa gleich der Breite des Nebenluftaustrittsspaltes ist, weil dann die Ausgleichskammer an sich zwei parallele Wände aufweisen kann. Darüber hinaus bietet diese Gestaltung den Vorteil, daß keine zusätzliche, ggf. unerwünschte Umlenkung der Kühlluftströme auftritt. In diesem Zusammenhang ist es auch vorteilhaft, wenn die Ausgleichskammer sich schräg nach oben und außen, d.h. im wesentlichen in der Haupt-Strömungsrichtung der Kühlluft erstreckt.

Es hat sich bei Untersuchungen herausgestellt, daß der Nebenluftaustrittsspalt eine größere Weite besitzen sollte als der innere Ringspalt, wobei besonders günstige Ergebnisse dann erzielt werden können, wenn die Weite des Nebenluftaustrittsspaltes wenigstens doppelt so groß ist wie die Weite des inneren Ringspaltes.

Die Strömungsverhältnisse für die Kühlluft werden dann besonders gut, wenn der Kühlluftdurchsatz durch den inneren Ringspalt wesentlich größer, vorzugsweise doppelt so groß ist, als der Kühlluftdurchsatz durch den Nebenluftaustrittsspalt, weil dann ein zu starkes Anblasen des Folienschlauches anschließend an das Auftreffen der Kühlluft aus dem inneren Ringspalt, was zu einem Flattern führen könnte, zuverlässig verhindert wird. In diesem Zusammenhang macht sich natürlich auch der Umstand günstig bemerkbar, wenn die Weite des Nebenluftaustrittsspaltes erheblich größer ist als die des inneren Ringspaltes.

Die Aufspaltung des Kühlluftstromes in die Teilströme durch den inneren Ringspalt und durch den Nebenluftaustrittsspalt erfolgt erfindungsgemäß in besonders einfacher Weise dadurch, daß im Zuluftrohr ein Luftaufteilelement angeordnet ist, welches koaxial zueinander angeordnete, im wesentlichen ringförmige Durchtrittskanäle für die beiden Teilströme aufweist, wobei vorzugsweise der innere, mit der Ausgleichskammer in Verbindung stehende Durchtrittskanal von ringförmig um das Absaugrohr angeordneten Axialbohrungen gebildet ist. Bei einer solchen Ausbildung und Anordnung des Luftaufteilelementes lassen sich die Teilluftströme bzw. Luftmengen einfach durch entsprechende Wahl des Durchlaßquerschnittes der Durchtrittskanäle einstellen. Darüber hinaus kann ein solches Luftaufteilelement leicht hergestellt und ohne Schwierigkeiten montiert werden.

Es liegt weiter im Rahmen der Erfindung, daß der Nebenluftaustrittsspalt mittels eines Durchbrechungen aufweisenden, in der Fläche des Luftführungsrohres liegenden Bleches abgedeckt ist. Diese Ausbildung hat zum einen den Vorteil, daß die untere Lippe des Nebenluftaustrittsspaltes, die gleichzeitig die obere Lippe des inneren Ringspaltes ist, ggf. auch das Luftaufteilelement, in einfacher Weise und zuverlässig montiert werden können. Zum anderen können unter Umständen die Durchbrechungen des Bleches sich günstig auf die Strömungsverhältnisse auswirken, beispielsweise eine geringfügige Verwirbelung der aus dem Nebenluftaustrittsspalt austretenden Luft bewirken, wodurch erforderlichenfalls die Kühlwirkung weiter erhöht werden kann.

Schließlich ist nach der Erfindung vorgesehen, daß die Weite des inneren Ringspaltes und/oder des Nebenluftaustrittsspaltes bzw. der Ausgleichskammer verstellbar ist, wodurch unter Umständen eine weitere Möglichkeit zur Anpassung der Kühlvorrichtung an unterschiedliche Produktionsverhältnisse gegeben ist. Es hängt ja die Kühlluftmenge unter Umständen auch von den Umgebungsverhältnissen, beispielsweise der Temperatur in der Produktionshalle, irgendwelchen unkontrollierbaren Luftströmen, der durch den äußeren Ringspalt zugeführten Kühlluftmenge usw., ab.

Weitere Merkmale, Einzelheiten und Vorteile der Erfindung ergeben sich aus der folgenden Beschreibung eines bevorzugten Ausführungsbeispieles anhand der Zeichnung.

0021420

- 9 -

Es zeigen, jeweils relativ stark vereinfacht:

Figur 1     im Vertikalschnitt den Blaskopf sowie die gesamte Kühlvorrichtung einer Folien-Blasanlage;

Figur 2     in vergrößertem Maßstab und im Axialschnitt den Bereich oberhalb des Blaskopfes mit den Kühlluftaustrittsspalten der Vorrichtung nach Figur 1 bei Erzeugung eines Folienschlauches relativ großen Durchmessers und

Figur 3     eine Ansicht entsprechend Figur 2, jedoch bei Erzeugung eines Folienschlauches verhältnismäßig kleinen Durchmessers.

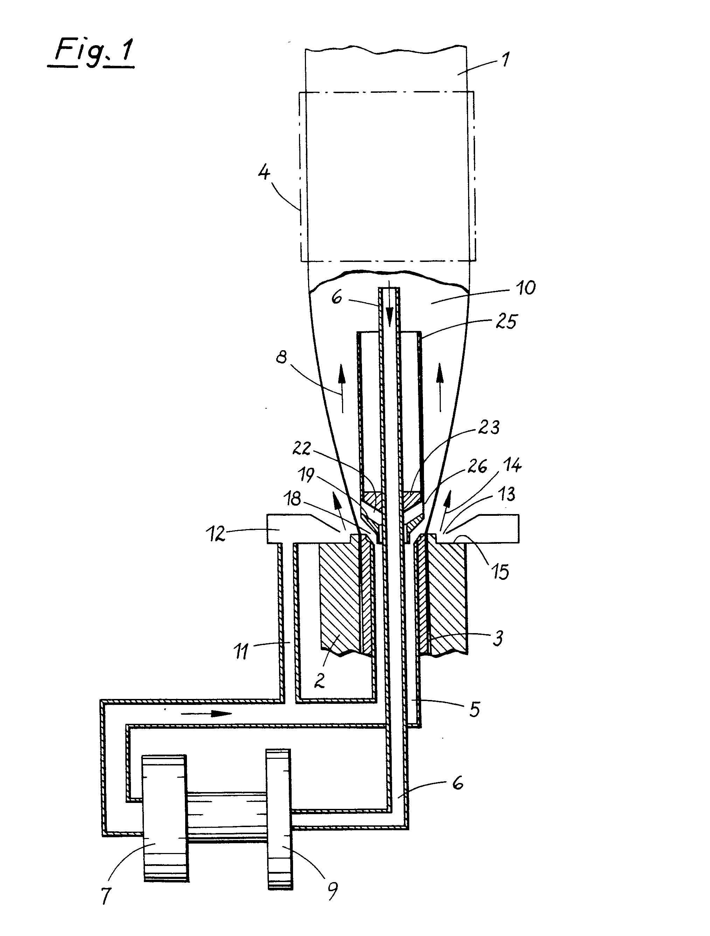

Wie die Zeichnung erkennen läßt, dient zur Herstellung der Schlauchfolie 1 aus thermoplastischem Kunststoff in an sich bekannter Weise ein Blaskopf 2 mit einer ringförmigen Schlitzdüse 3, die an einen nicht gezeigten Extruder angeschlossen ist. Der Folienschlauch 1, der unter innerem Überdruck steht, wird über einen in Figur 1 strichpunktiert angedeuteten Kalibrierkorb 4 und nicht gezeigte Abquetsch- bzw. Abzugswalzen abgeführt. Der Durchmesser des Folienschlauches 1 wird dabei im wesentlichen durch den Kalibrierkorb 4 bestimmt. Im Inneren der vom Folienschlauch 1 gebildeten und am unteren Ende durch den Blaskopf 2, am oberen Ende durch Abquetschwalzen od.dgl. abgeschlossenen Blase besteht in an sich bekannter Weise ein gewisser, zur Erzielung des gewünschten Durchmessers ausreichender Überdruck.

Den Blaskopf 2 durchsetzen, wie an sich ebenfalls bekannt, zentrisch zwei Rohre, nämlich ein Zuluftrohr 5 und innerhalb dieses ein Absaugrohr 6. Zur Erzeugung des Überdruckes in dem Folienschlauch 1 bzw. der Blase wird mittels eines Gebläses 7 durch das Zuluftrohr 5, wie durch die Pfeile 8 angedeutet ist, Luft eingeführt. Die zur Aufrechterhaltung des Druckes nicht erforderliche Luft wird dann durch das Abluftrohr 6 mittels eines zweiten Gebläses 9 abgesaugt. Abhängig von der Fördermenge der Gebläse 7 und 9, bei denen beispielsweise die Drehzahl verändert werden kann, ergibt sich dann ein gewisser Überdruck im Innenraum 10 der Blase.

Das Zuluftrohr 5 ist mit einer Zweigleitung 11 versehen, die zu einem Ringkanal 12 führt, welcher die Ring-Schlitzdüse 3 an der Oberseite des Blaskopfes 2 umgibt, wo ein äußerer Ringspalt 13 vorgesehen ist, durch den die Luft entsprechend den Pfeilen 14 austritt und an der Außenseite des Folienschlauches 1 zu dessen Kühlung und Stabilisierung entlangstreift.

Das Zuluftrohr 5 endet, wie die Zeichnung deutlich erkennen läßt, nahe der Deckfläche 15 des Blaskopfes 2, wo ein sich konisch nach oben erweiternder, in einer Lippe 16 endender Bereich 17 vorgesehen ist. Dieser sich konisch erweiternde Bereich 17 mit der Lippe 16 bildet die untere Wand eines inneren Ringspaltes 18. Die obere Lippe des inneren Ringspaltes 18 ist von einem Luftaufteilelement 19 gebildet, welches konzentrisch auf dem Absaugrohr 6 sitzt. Das Luftaufteilelement 19 ist im wesentlichen doppelt-kegelstumpfförmig ausgebildet, wobei die untere Kegel-Mantelfläche 20 als obere Begrenzung des inneren Ringspaltes 18 dient, während die obere Kegel-Mantelfläche 21 eine Ausgleichskammer 22 nach unten begrenzt. Die obere Begrenzung der Ausgleichskammer 22 stellt ein Einsatzstück 23 am unteren Ende 24 eines Luftleitrohres 25 dar. Die Ausgleichskammer 22 mündet über einen Nebenluftaustrittsspalt 26 oberhalb des inneren Ringspaltes 18 ebenfalls ins Innere 10 der Folienblase bzw. des Schlauches 1. In der Zeichnung ist der Nebenluftaustrittsspalt 26 völlig frei dargestellt. Es kann jedoch, insbesondere aus konstruktiven und strömungstechnischen Erwägungen, günstig sein, den Nebenluftaustrittsspalt 26 mittels eines Lochbleches od. dgl., welches sich in Verlängerung des Luftführungsrohres 25 erstreckt, abzudecken.

Das Luftaufteilelement 19 hat unten einen etwa zylinderringförmigen Ansatz 27, welcher in das obere Ende des Zuluftrohres 5 einragt und auf diese Weise einen Durchtrittskanal 28 für eine Kühlluftteilmenge bildet, welche zum inneren Ringspalt 18 strömt. Weiterhin sind in dem Ansatz 27 Durchbrechungen 29, beispielsweise axiale Bohrungen, vorgesehen, welche eine Verbindung zwischen dem oberen Ende des Zuluftrohres 5 und der Ausgleichskammer 22 herstellen.

Der Querschnitt des ringförmigen Durchtrittskanales 28 bzw. der Durchbrechungen 29 wird dabei so gewählt, daß durch den Ringkanal 28 im allgemeinen eine wesentlich größere Luftmenge strömen kann als durch die Durchbrechungen 29. Es wäre beispielsweise denkbar, die Querschnitte so zu wählen, daß durch den Ringkanal 28 70%, durch die Durchbrechungen 29 dagegen nur 30% der über das Zuluftrohr 5 zugeführten Kühlluftmenge strömen.

Es ist weiterhin noch zu erwähnen, daß die Weite des inneren Ringspaltes 18 üblicherweise wesentlich geringer ist als die Weite des Nebenluftaustrittsspaltes 26. Normalerweise sollte der Nebenluftaustrittsspalt 26 wenigstens zweimal so breit sein wie der innere Ringspalt 18. In der Praxis hat es sich gezeigt, daß der innere Ringspalt 18 beispielsweise an seiner engsten Stelle eine Weite von 25 mm besitzen kann, während gleichzeitig der Nebenluftaustrittsspalt bzw. die Ausgleichskammer 22, deren obere und untere Wand ja etwa parallel verlaufen, eine Weite von 50 bis 100 mm besitzt.

Schließlich sei noch darauf hingewiesen, daß die Kühlvorrichtung so ausgestaltet werden kann, daß sich die Weite des inneren Ringspaltes 18 und des Nebenluftaustrittsspaltes 26 bzw. der Ausgleichskammer 22 verändern lassen. Dies läßt sich beispielsweise dadurch bewerkstelligen, daß das Luftaufteilelement 19 und/oder das Einsatzstück 23 am unteren Ende des Luftleitrohres 25 axial entlang des Absaugrohres 6 verstellt werden können.

Die Wirkungsweise der Kühlvorrichtung nach der Erfindung ist wie folgt:

Mit Hilfe des Druckgebläses 7 wird die Kühlluft über das Zuluftrohr 5 zu ihrem überwiegenden Teil durch den inneren Ringspalt 18 an die Innenfläche des Folienschlauches 1 geblasen. Der Kühlluftstrom strömt dabei in den Spalt zwischen dem Folienschlauch 1 und dem Luftführungsrohr 25 nach oben. Anschließend wird die Luft durch den Einlaßstutzen des Absaugrohres 6 mit Hilfe des Sauggebläses 9 abgesaugt. Zur Konstanthaltung des Schlauchdurchmessers dient ein Regelsystem, welches die Menge der abgesaugten und zugeführten Luft aufeinander abstimmt.

Infolge des Vorhandenseins des Luftaufteilelementes 19 wird ein Teil der zugeführten Kühlluft in die Ausgleichskammer 22 abgezweigt und tritt aus dieser durch den Nebenluftaustrittsspalt 26 oberhalb des inneren Ringspaltes 18 aus, wo er sich mit der durch diesen inneren Ringspalt zugeführten Kühlluftmenge vermischt. Auf diese Weise erfolgt eine gewisse Verwirbelung, wodurch die Kühlwirkung verbessert wird.

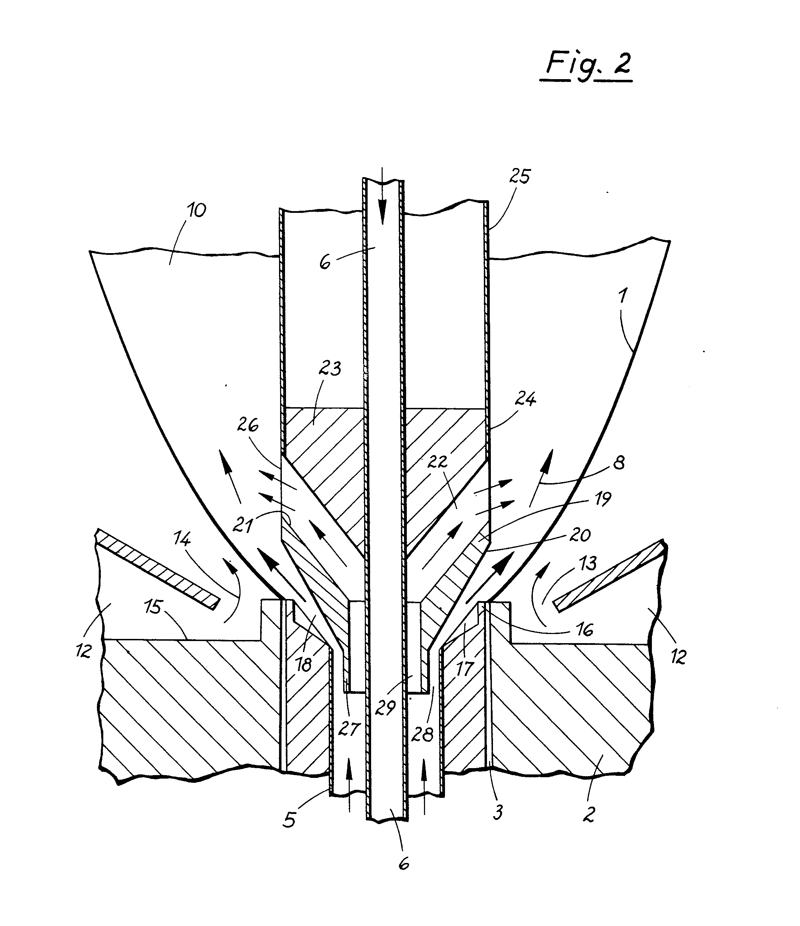

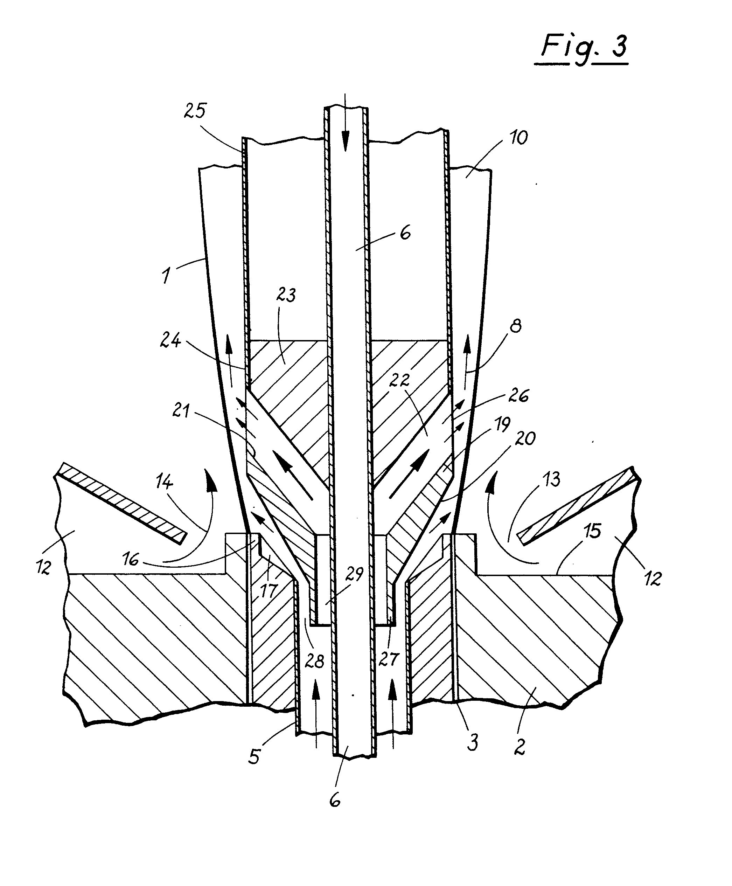

Der innere Ringspalt 18 mündet, wie die Figuren 2 und 3 zeigen, unmittelbar im Bereich des oberen Endes der Schlitzdüse 3 des Blaskopfes 2. Seine Unterlippe 16 ist dabei im allgemeinen gegen die Schlitzdüse 3 wärmeisoliert.

Die Menge der durch den inneren Ringspalt 18 bzw.

0021420

- 14 -

den Nebenluftaustrittsspalt 26 austretenden Kühlluft hängt von den Aufblasverhältnissen des Folienschlauches 1 ab, wie ein Vergleich der Figuren 2
und 3 zeigt, wo die durchtretende Luftmenge jeweils
durch die entsprechende Pfeilgröße angedeutet ist.

Bei großen Aufblasverhältnissen (Figur 2) geht der
überwiegende Teilstrom der insgesamt zugeführten
Kühlluft durch den inneren Ringspalt 18. Der Nebenteilluftstrom durch die Ausgleichskammer 22 und den
Nebenluftaustrittsspalt 3 ist aufgrund der sich hierbei einstellenden Strömungs- und Druckverhältnisse
vergleichsweise sehr gering.

Bei kleineren Aufblasverhältnissen (Figur 3) wird
der Hauptkühlluftstrom durch den inneren Ringspalt
18 wegen des nur verhältnismäßig engen Spaltes
zwischen dem Folienschlauch 1 und der Oberlippe 19
des inneren Ringspaltes 18 gedrosselt. Dies hat
zur Folge, daß ein höherer Anteil der Kühlluft
durch die Ausgleichskammer 22 und den Nebenluftaustrittsspalt 26 geführt wird und erst nach der
Oberlippe 19 des inneren Ringspaltes 18 an die
Innenseite des Folienschlauches 1 gelangt. Aufgrund
der in diesem Falle erfolgenden Verminderung der
Luftmenge durch den Hauptaustrittsspalt, nämlich
den inneren Ringspalt 18, besteht nicht oder nur in
sehr untergeordnetem Maße die Gefahr eines Ansaugens
des Folienschlauches 1 gegen das die Oberlippe des
inneren Ringspaltes 18 bildende Luftaufteilelement 19.

Man erreicht also bei Verwendung einer Kühlvorrichtung nach der Erfindung eine sehr intensive Kühlung, da über den inneren Ringspalt 18 und den
Nebenluftaustrittsspalt 26 eine relativ große Kühlluftmenge zugeführt werden kann. Trotzdem besteht
aber nicht die Gefahr eines Flatterns oder Anhaftens
der Schlauchblase. Der Schlauch wird vielmehr einwandfrei und in einer für die Erzeugung hoher
Qualität zweckmäßigen Weise stabilisiert.

0021420

- 1 -

Patentansprüche

1. Kühlvorrichtung für mittels eines Blaskopfes (2) hergestellte Kunststoff-Schlauchfolien (1), welche anschließend an den Blaskopf (2) zur Zuführung von Kühlluft je einen bezüglich des Folienschlauches (1) inneren und äußeren Ringspalt (18, 13) sowie zur Bildung des Innenluftsystems ein den Blaskopf (2) axial durchsetzendes Absaugrohr (6), ein dieses koaxial umgebendes, von unten an den inneren Ringspalt heranführendes Zuluftrohr (5) und ein an die obere Lippe des inneren Ringspaltes oben anschließendes, das Absaugrohr (6) ebenfalls koaxial umschließendes Luftführungsrohr (25) aufweist, dadurch gekennzeichnet, daß im Bereich des unteren Endes (24) des Luftführungsrohres (25) eine mit dem Zuluftrohr (5) in Strömungsverbindung (29) stehende Ausgleichskammer (22) vorgesehen ist, die in einen radialen, etwa in der Fläche des Luftführungsrohres (25) liegenden Nebenluftaustrittsspalt (26) mündet, der einen gegenüber dem Querschnitt des inneren
Ringspaltes (18) vergrößerten Querschnitt aufweist.

2. Kühlvorrichtung nach Anspruch 1, dadurch gekennzeichnet,
daß die axiale Höhe der Ausgleichskammer (22)
etwa gleich der Breite des Nebenluftaustrittsspaltes (26) ist.

3. Kühlvorrichtung nach Anspruch 1 oder 2, dadurch
gekennzeichnet,
daß die Ausgleichskammer (22) sich schräg nach
oben und außen erstreckt.

4. Kühlvorrichtung nach einem der vorhergehenden
Ansprüche, dadurch gekennzeichnet,
daß die Weite des Nebenluftaustrittsspaltes (26)
wenigstens doppelt so groß ist wie die Weite des
inneren Ringspaltes (18).

5. Kühlvorrichtung nach einem der vorhergehenden
Ansprüche, dadurch gekennzeichnet,
daß der Kühlluftdurchsatz durch den inneren
Ringspalt (18) wesentlich größer, vorzugsweise
doppelt so groß, ist als der Kühlluftdurchsatz
durch den Nebenluftaustrittsspalt (26).

6. Kühlvorrichtung nach einem der vorhergehenden
Ansprüche, dadurch gekennzeichnet,
daß zur Aufspaltung des Kühlluftstromes in Teilströme durch den inneren Ringspalt (18) und durch den Nebenluftaustrittsspalt (26) ein im Zuluftrohr (5) angeordnetes Luftaufteilelement (19)
dient, welches koaxial zueinander angeordnete,
im wesentlichen ringförmige Durchtrittskanäle
(28, 29) für die beiden Teilströme aufweist.

7. Kühlvorrichtung nach Anspruch 6, dadurch gekennzeichnet,
daß der innere, mit der Ausgleichskammer (22) in
Verbindung stehende Durchtrittskanal von ringförmig um das Absaugrohr (6) angeordneten Axialbohrungen (29) gebildet ist.

8. Kühlvorrichtung nach einem der vorhergehenden
Ansprüche, dadurch gekennzeichnet,
daß der Nebenluftaustrittsspalt (26) mittels
eines Durchbrechungen aufweisenden, in der
Fläche des Luftführungsrohres (25) liegenden
Bleches abgedeckt ist.

9. Kühlvorrichtung nach einem der vorhergehenden
Ansprüche, dadurch gekennzeichnet,
daß die Weite des inneren Ringspaltes (18) und/
oder des Nebenluftaustrittsspaltes (26) bzw. der
Ausgleichskammer (22) verstellbar ist.

Fig. 1

1/3

0021420

0021420

*Fig. 2*

_Fig. 3_

**Europäisches Patentamt**

# EUROPÄISCHER RECHERCHENBERICHT

0021420

Nummer der Anmeldung

EP 80 10 3597.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U - 7 236 211 (WINDMÖLLER & HÖLSCHER) <br> * Anspruch 2 * <br> -- | 1 |
| | FR - A1 - 2° 267 873 (WINDMÖLLER & HÖLSCHER) <br> * Anspruch 1 * <br> -- | 1 |
| D | DE - A1 - 2 725 832 (REIFENHÄUSER KG) <br> * Ansprüche 1 bis 9 * <br> -- | 1 |
| P | DE - A1 - 2 814 283 (ING.L. DOLCI S.P.A.) <br> * Anspruch 1 * <br> -- | 1 |
| A | FR - A1 - 2 370 568 (ATO-EMBALLAGE) <br> * Fig. 2 * <br> ---- | |

**KLASSIFIKATION DER ANMELDUNG (Int.Cl.³)**

B 29 D 7/02
B 29 F 3/08

**RECHERCHIERTE SACHGEBIETE (Int. Cl.³)**

B 29 D 7/02
B 29 D 23/04
B 29 F 3/08

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| | |
|---|---|
| X | Der vorliegende Recherchenbericht wurde für alle Patentansprüche erstellt. |

| Recherchenort | Abschlußdatum der Recherche | Prüfer |
|---|---|---|
| Berlin | 10-10-1980 | BITTNER |